# DEMANDE DE BREVET EUROPEEN

(11) **EP 1 046 527 A1**
(43) Date de publication de la demande: **25.10.2000**
(21) Numéro de dépôt: 00401133.4
(22) Date de dépôt: 21.04.2000
(51) Int. Cl.: B60J 5/04

(54) **Porte de véhicule automobile à structure modulaire**

(30) Priorité: 23.04.1999 FR 9905161
(71) Demandeur: Valeo Securité Habitacle, 94042 Créteil (FR)
(72) Inventeur: Suparshi, Bogdan, 94500 Champigny sur Marne (FR); Delmas, Philippe, 78100 Saint Germain en Laye (FR)
(74) Mandataire: Lenne, Laurence

(57) **Abrégé**

L'invention propose une porte de véhicule automobile du type comportant un élément structurel en forme générale de panneau (12) sur lequel est monté un module (14) comportant des éléments d'équipement de la porte, caractérisée en ce qu'il est prévu des moyens (20) de positionnement du module (14) par rapport au panneau (12), et en ce que le module (14) est fixé sur le panneau par un cordon de colle (22).

## Description

La présente invention concerne la conception d'une porte de véhicule automobile.

Chaque porte de véhicule automobile, outre sa fonction d'ouvrant permettant (en position ouverte) d'accéder à l'habitacle du véhicule et (en position fermée) de clore l'habitacle, est aussi un élément structurel dans lequel sont agencés de nombreux composants et équipements tels que par exemple un mécanisme de serrure, un mécanisme de lève-vitre, manuel ou électrique, etc.

Afin de faciliter la conception d'une porte et plus particulièrement sa fabrication industrielle en grande série, il a été proposé de regrouper ces éléments ou composants sur un module d'équipement de la porte.

Le module constitue ainsi un sous-ensemble qui est rapporté sur la porte, c'est-à-dire qui est fixé sur un élément structurel de cette dernière en forme générale de panneau.

Le module peut être monté directement sur l'élément structurel principal de la porte qui comporte notamment la peau extérieure de carrosserie ou, de la même manière, être monté sur un autre élément structurel en forme générale de panneau appelé contre-porte.

L'élément structurel qui reçoit le module est généralement un panneau en tôle sur lequel, selon l'état de la technique, le module de porte est positionné, par exemple par deux pions de positionnement, et il est fixé par l'intermédiaire de vis à tôle qui sont en grand nombre, par exemple de l'ordre d'une dizaine de vis.

Un tel mode de fixation du module de porte sur l'élément structurel de la porte qui le reçoit ne permet pas des opérations de montage et/ou de démontage suffisamment rapides et il nécessite de faire appel à des outils spécifiques, tels que des clés ou des tournevis.

Afin de remédier à ces inconvénients, l'invention propose une porte de véhicule automobile du type comportant un élément structurel en forme générale de panneau sur lequel est monté un module comportant des éléments d'équipement de la porte, caractérisé en ce qu'il est prévu des moyens de positionnement du module par rapport au panneau, et en ce que le module est fixé sur le panneau par un cordon de colle.

Selon d'autres caractéristiques de l'invention :
- le cordon de colle est un cordon périphérique qui s'étend sensiblement le long du pourtour du module ;
- la face du module sur laquelle est appliqué le cordon de colle comporte une gorge périphérique dans laquelle est déposé le cordon de colle ;
- le cordon de colle est un cordon sensiblement continu ;
- il est prévu un moyen de découpe du cordon de colle en vue du démontage du module ;
- le moyen de découpe est un fil de découpe agencé le long du cordon de colle, radialement vers l'intérieur par rapport au cordon et dont au moins une extrémité est accessible pour exercer une traction sur le fil ;
- le fil de découpe est positionné sur la face du module sur laquelle est appliqué le cordon de colle ;
- le fil de découpe est maintenu radialement vers l'intérieur par des pattes de positionnement réparties le long du cordon de colle ;
- le moyen de découpe est un fil de découpe noyé dans le cordon de colle et dont au moins une extrémité est accessible pour exercer une traction sur le fil ;
- les moyens de positionnement comportent au moins deux pions de positionnement espacés transversalement l'un de l'autre.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective éclatée qui représente un élément structurel d'une porte avant de véhicule automobile en association avec un module d'équipement de cette porte ;
- la figure 2 est une vue schématique en élévation illustrant la face de collage du module de la figure 1 ;
- la figure 3 est une vue de détail à plus grande échelle en section transversale selon la ligne 3-3 de la figure 2 ; et
- la figure 4 est une vue similaire à celle de la figure 1 qui illustre une variante de réalisation de l'agencement du fil de découpe du cordon de colle.

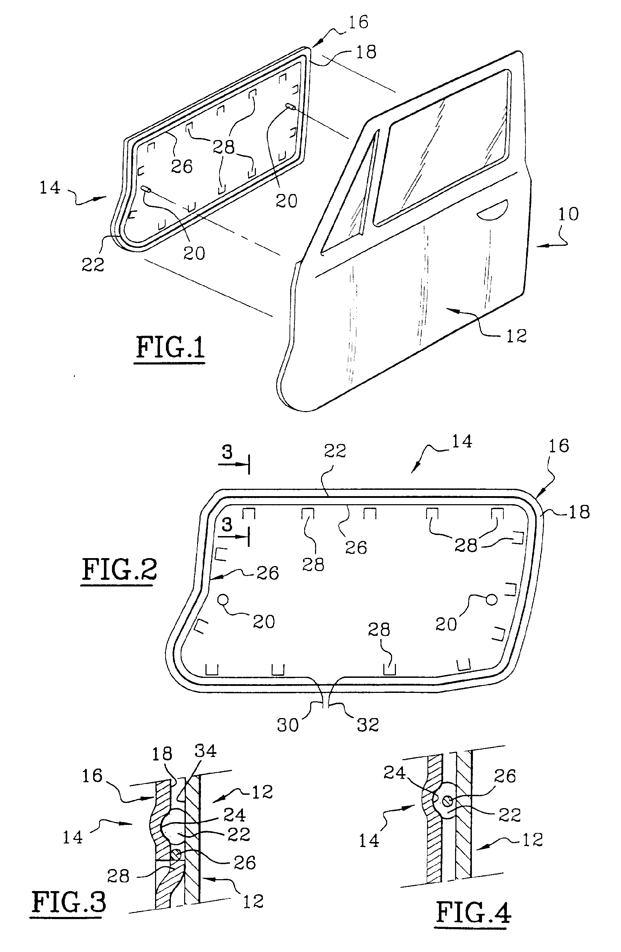

On a représenté à la figure 1 un élément structurel appartenant à une porte 10 avant gauche de véhicule automobile qui se présente, à sa partie inférieure, sous la forme générale d'un panneau 12 dont la face intérieure, non visible à la figure 1, est destinée à recevoir un module 14 d'équipement de la porte.

D'une manière générale connue, le module 14 se présente sous la forme lui aussi d'une plaque ou panneau 16 d'orientation générale verticale comportant notamment une partie périphérique en forme de cadre et qui porte de nombreux composants et équipements qui, pour des raisons de simplification de la représentation, n'ont pas été illustrés sur les figures.

La face intérieure 18 du module 14 tournée vers la face intérieure du panneau structurel 12 comporte, d'une manière connue, deux pions 20 de centrage et de positionnement, notamment selon les directions verticale et transversale, du panneau 16 par rapport à l'élément structurel 12, les pions 20 étant reçus dans des trous correspondants, non représentés. formés dans la face intérieure du panneau 12.

Conformément aux enseignements de l'invention, le module 14 est fixé sur le panneau 12 par un cordon de colle 22. Dans le mode de réalisation illustré schématiquement sur les figures, le cordon de colle 22 est un cordon périphérique continu qui est déposé tout le long de la périphérie de la face intérieure 18 du panneau 16 du module 14, de préférence dans une gorge 24 formée préalablement à cet effet.

La gorge 24 permet de déposer avec précision le cordon de colle 22 et de le retenir avant l'opération de collage proprement dite qui consiste à appliquer le module 14 avec son cordon de colle 22 contre la partie en vis-à-vis 34 de la face intérieure du panneau 12.

Le cordon de colle 22, dans la mesure du possible, est de préférence un cordon continu qui s'étend tout le long du pourtour de la face intérieure 18 du module 14.

Afin de permettre un démontage aisé du module 14, notamment en vue de réparer certains éléments et composants d'équipement qu'il porte, il est prévu un moyen de découpe rapide du cordon de colle 24 qui est ici un fil métallique de découpe 26.

Dans le premier mode de réalisation illustré aux figures 1 à 3, le fil 26 est agencé le long du cordon de colle 22, radialement vers l'intérieur par rapport au cordon 22.

Le fil 26 est maintenu radialement en position grâce à des pattes 28 sur lesquelles il est positionné, chaque patte 28 pouvant, à titre d'exemple, être réalisée venue de matière avec le panneau 16 du module 14.

Afin de pouvoir effectuer une traction, radialement vers l'extérieur, sur le fil 26 pour découper le cordon de colle 22, il est prévu que ses deux extrémités libres 30 et 32 sont accessibles radialement depuis l'extérieur.

La découpe du cordon de colle s'effectue donc en appliquant un effort de traction à l'une ou à l'autre des deux extrémités 30 et 32 du module de découpe 26.

Dans le second mode de réalisation illustré à la figure 4, le fil de découpe 26 est noyé dans le cordon de colle 22 lors de la dépose de ce dernier dans la gorge 24.

Outre la grande facilité et la grande rapidité de montage et de démontage, la conception selon l'invention faisant appel à un cordon de colle périphérique permet d'assurer une bonne étanchéité entre les parties dites humides et sèches de la porte.

Enfin, la fixation au moyen d'un cordon de colle périphérique accroît la rigidité globale de l'assemblage et donc de la porte.

## Revendications

1. Porte de véhicule automobile du type comportant un élément structurel en forme générale de panneau (12) sur lequel est monté un module (14) comportant des éléments d'équipement de la porte, du type comportant des moyens (20) de positionnement du module (14) par rapport au panneau (12), et du type dans lequel le module (14) est fixé sur le panneau par un cordon de colle (22), caractérisée en ce que le cordon de colle (22) est un cordon périphérique qui s'étend sensiblement le long du pourtour (18) du module (14, 16).

2. Porte selon la revendication précédente, caractérisée en ce que la face du module sur laquelle est appliqué le cordon de colle (22) comporte une gorge périphérique (24) dans laquelle est déposé le cordon de colle (22).

3. Porte selon l'une quelconque des revendications précédentes, caractérisée en ce que le cordon de colle (22) est un cordon sensiblement continu.

4. Porte selon l'une quelconque des revendications précédentes, caractérisée en ce qu'il est prévu un moyen (26) de découpe du cordon de colle en vue du démontage du module (14).

5. Porte selon la revendication 4, caractérisée en ce que le moyen de découpe est un fil de découpe (26) agencé le long du cordon de colle (22), radialement vers l'intérieur par rapport au cordon et dont au moins une extrémité (30, 32) est accessible pour exercer une traction sur le fil.

6. Porte selon la revendication 5, caractérisée en ce que le fil de découpe (26) est positionné sur la face du module (14) sur laquelle est appliqué le cordon de colle (22).

7. Porte selon la revendication 6, caractérisée en ce que le fil de découpe est maintenu radialement vers l'intérieur par des pattes de positionnement (28) réparties le long du cordon de colle.

8. Porte selon la revendication 7, caractérisée en ce que le moyen de découpe est un fil de découpe (26) noyé dans le cordon de colle (22) et dont au moins une extrémité (30, 32) est accessible pour exercer une traction sur le fil (26).

9. Porte selon l'une quelconque des revendications précédentes, caractérisée en ce que les moyens de positionnement comportent au moins deux pions (20) de positionnement espacés transversalement l'un de l'autre.
